# EUROPÄISCHE PATENTSCHRIFT

(11) **EP 3 047 985 B1**
(45) Veröffentlichungstag und Bekanntmachung des Hinweises auf die Patenterteilung: **09.08.2017**
(21) Anmeldenummer: 15194004.6
(22) Anmeldetag: 11.11.2015
(51) Int. Cl.: B60C 15/06

(54) **FAHRZEUGREIFEN**
VEHICLE TYRES
PNEU

(30) Priorität: 20.01.2015 DE 102015200823
(43) Veröffentlichungstag der Anmeldung: 27.07.2016
(73) Patentinhaber: Continental Reifen Deutschland GmbH, 30165 Hannover (DE)
(72) Erfinder: Jabri, Mohamed Aymen, 30167 Hannover (DE)
(74) Vertreter: Widjaja, Wira

(56) Entgegenhaltungen:
- JP-A- 2003 306 014
- JP-A- 2003 312 216

## Beschreibung

Die Erfindung betrifft einen Fahrzeugreifen mit einer Reifenkarkasse, zwei Seitenwänden und zwei Wulstbereichen mit Reifenkernen mit einem Apex,
wobei der Apex sich mit dem auf der Unterseite anliegenden Reifenkern in Umfangsrichtung des Fahrzeugluftreifens erstreckt und ringförmig im Reifenwulst angeordnet ist, wobei der Apex einen im Wesentlichen dreieckförmigen Querschnitt aufweist und aus einem Gummimaterial besteht,
wobei im Apex eine Vielzahl von Festigkeitsträgern angeordnet ist, wobei der Durchmesser der Festigkeitsträger ca. 5 bis 500 µm beträgt und der Apex mindestens eine Höhe von 25 mm besitzt,
wobei die Festigkeitsträger in Umfangsrichtung ausgerichtet sind und der Apex durch die Anordnung der Festigkeitsträger anisotrope Materialeigenschaften aufweist,
wobei die Torsionssteifigkeit des Apex in der Höhenausrichtung durch die horizontale Anordnung der Festigkeitsträger verstärkt wird.

Bei konventionellen Fahrzeugreifen ist bekannt im Reifenwulst einen Wulstkern mit einem Apex bzw. Kernreiter vorzusehen. Bei der Herstellung von Fahrzeugreifen mit Reifenaufbautrommeln werden die Apexe mit den Wulstkernen bei einem bestimmten Verfahrensschritt appliziert. In Abhängigkeit des jeweiligen Reifenbauverfahrens werden die Apexe dabei unterschiedlich stark verformt oder umgebogen. Bei Apexen, die aus einem sehr harten und unflexiblen Material bestehen, kann diese Verformung im Herstellungsprozess zu Problemen führen. Ein höherer Kraftaufwand beim Verbiegen der Apexe würde weiterhin die Zykluszeit verlängern, die zur Herstellung eines Fahrzeugreifens benötigt wird. Außerdem kann es zu Qualitätsproblemen der herzustellenden Reifen kommen.

In der gattungsbildenden JP 2003 306014 A ist ein Fahrzeugreifen der eingangs geannten Art als Stand der Technik erwähnt. Im Apex des Fahrzeugreifens ist eine Vielzahl in Umfangsrichtung ausgerichteter Festigkeitsträger, welche Kurzfasern sind, vorgesehen.

Aus der JP 2003 312216 A ist ein weiterer Fahrzeugluftreifen mit in Apexen verlaufenden Festigkeiträgern bekannt. Die Festigkeitsträger sind in Umfangsrichtung umlaufende Korde, wobei pro Apex drei bis fünfundzwanzig Korde vorgesehen sind und der Durchmesser der Korde mit zunehmender Entfernung vom Wulstkern abnimmt. Dadurch soll eine Zunahme der Steifikgeit im Seitenwandbereich in Richtung zum Wulstkern erreicht und der Fahrkomfort verbessert werden.

Der Erfindung liegt die Aufgabe zugrunde, einen Fahrzeugreifen bereitzustellen, bei dem die Wulstkonstruktion mit dem Apex im Hinblick auf Herstellung des Fahrzeugreifens abgestimmt ist.

Gelöst wird die Aufgabe gemäß den kennzeichnenden Merkmalen von Anspruch 1 dadurch, dass die Festigkeitsträger im Apex in der Seitenansicht einen wellenförmigen Verlauf aufweisen, wobei die Festigkeitsträger in Form von langen Fasern ausgebildet sind, welche ringförmig und ohne Unterbrechungen im Apex angeordnet sind.

Ein Vorteil der Erfindung ist insbesondere darin zu sehen, dass durch die erfindungsgemäße Wulstkonstruktion das Verformen oder Umbiegen der Apexe wesentlich erleichtert wird.

Im Apexmaterial sind eine Vielzahl von Festigkeitsträgern angeordnet, die in Umfangsrichtung zum Reifenwulst ausgerichtet sind. Durch diese Anordnung der Festigkeitsträger wird die Torsionssteifigkeit des Apex in der Höhenausrichtung verstärkt. Diese Torsionssteifigkeit ist insbesondere deswegegen wichtig, weil spezielle Pkw-Reifen mit besonders hohen Apexen versehen werden müssen.

Durch die Anordnung der Festigkeitsträger in Umfangsrichtung wird außerdem die Biegesteifigkeit in axialer Richtung des Fahrzeugreifens nicht beeinflusst. Dadurch lässt der Apex bei der Herstellung des Fahrzeugreifens mit einer Reifenbautrommel mit wenig Kraftaufwand in axialer Richtung verbiegen. Die geringe Biegesteifigkeit in axialer Richtung wird außerdem dadurch verstärkt, dass das Apexmaterial aus einer weichen Gummimischung besteht. Die neuartige Apexkonstruktion verbessert dadurch den Herstellungsprozess für die Fertigung von Fahrzeugreifen mit einem hohen Apex.

Durch den wellenförmigen Verlauf der Festigkeitsträger lässt sich die Biegesteifigkeit des Apex anpassen. Dadurch, dass die Festigkeitsträger im Apex in Form von langen Fasern ausgebildet sind, welche ringförmig und ohne Unterbrechungen im Apex angeordnet sind, besitzt der Apex über seinen gesamten Umfang eine hohe Torsionssteifigkeit.

In einer vorteilhaften Weiterbildung der Erfindung ist vorgesehen, dass die Festigkeitsträger im Apex aus Kunstofffasern bestehen.

Kunststofffasern haben insbesondere den Vorteil, dass sie sich durch ein geringes Materialgewicht auszeichnen.

In einer weiteren vorteilhaften Weiterbildung der Erfindung ist vorgesehen, dass die Festigkeitsträger im Apex aus Aramid-Kunstofffasern bestehen.

Durch den Einsatz von Aramid-Kunststoffasern lässt sich eine relativ hohe Torsionssteifigkeit erzielen.

In einer weiteren vorteilhaften Weiterbildung der Erfindung ist vorgesehen, dass die Festigkeitsträger im Apex aus Kohlenstoffnanoröhren oder Kohlenstofffasern bestehen.

Der Einsatz von Kohlenstoffnanoröhren oder Kohlenstofffasern hat den Vorteil, dass sich diese Kunststofffasern durch ein geringes Gewicht auszeichnen.

In einer weiteren vorteilhaften Weiterbildung der Erfindung ist vorgesehen, dass das Apex-Material aus einer weichen Gummimischung besteht.

Der Einsatz einer weichen Gummimischung mit einer Shorehärte von < 90 gewährleistet eine geringe Biegesteifigkeit des Apex.

Anhand mehrerer Ausführungsbeispiele soll die Erfindung näher erläutert werden. Es zeigen:
- Fig. 1:: einen Apex in einer Querschnittansicht
- Fig. 2:: ein Ausführungsbeispiel des Apex in einer dreidimensionalen Ansicht
- Fig. 3:: einen Apex, der in einer gebogenen Form an der Reifenbautrommel anliegt

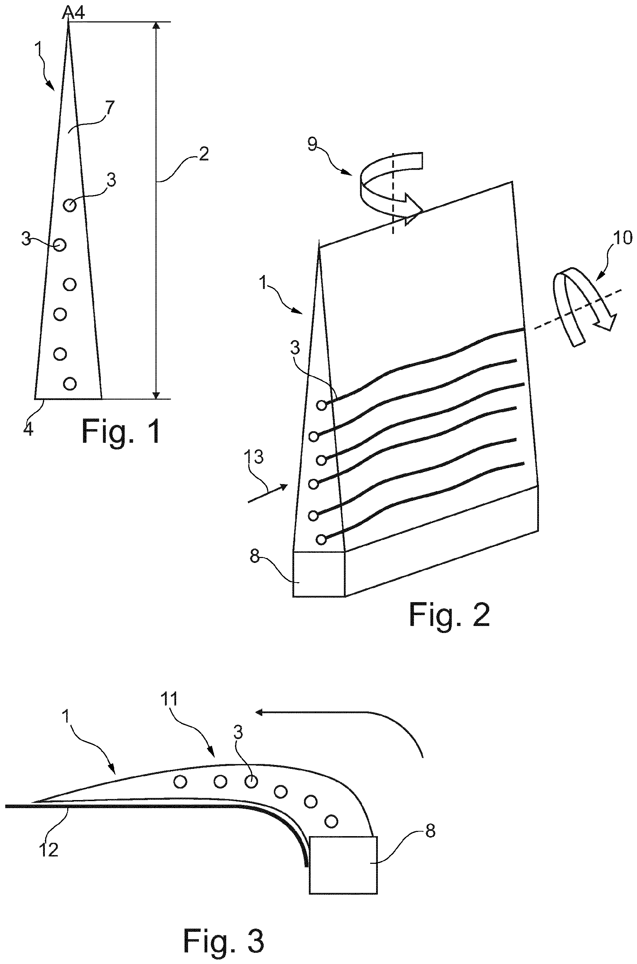

Die Figur 1 zeigt ein Ausführungsbeispiel des Apex 1 in einer Querschnittansicht. Der Apex 1 weist eine dreieckförmige Gestalt auf, wobei die Höhe des Apex mindestens 25mm beträgt. Bei speziellen Pkw-Reifen ist der Einsatz von derartig hohen Apexen notwendig, um bestimmte Fahreigenschaften zu erzielen oder um den Rollwiderstand zu reduzieren. Im Apexmaterial 7 sind einzelne Festigkeitsträger 3 angeordnet. Die Festigkeitsträger bestehen aus einzelnen Kunststofffasern oder aus Stahlcordmaterial und sind in Umfangsrichtung des Fahrzeugreifens angeordnet. Der Apex liegt an seiner Unterseite 4 an einem nicht dargestellten Reifenkern an.

Die Fig. 2 zeigt den Apex 1 mit dem Reifenkern 8 in einer dreidimensionalen Ansicht. Die Festigkeitsträger 3 sind in Umfangsrichtung zum Apex 1 bzw. zum Fahrzeugreifen angeordnet. Die Torsionssteifigkeit 9 ist mit dem gebogenen Pfeil dargestellt. Aufgrund der Festigkeitsträger 3 besitzt der Apex eine hohe Torsionssteifigkeit in der Höhenausrichtung des Apex. Der gebogene Pfeil 10 zeigt die Biegesteifigkeit des Apex. Die Biegesteifigkeit 10 des Apex wird durch die Ausrichtung der Festigkeitsträger 3 nicht beeinflusst. Dadurch dass der Apex aus einer weichen Gummimischung besteht, besitzt der Apex eine relativ geringe Biegesteifigkeit. Die Festigkeitsträger 3 besitzen einen Durchmesser zwischen 5 und 5000 µm, vorzugsweise 50 µm. Die Festigkeitsträger 3 sind entweder in Form von kurzen Fasern im Apex angeordnet oder verlaufen als geschlossener Ring oder spiralförmig im Apex.

Die Fig. 3 zeigt den Apex 1 bei der Reifenherstellung mit einer Reifenbautrommel 12. Bei einem Verfahrensschritt ist es notwendig, den Apex in der dargestellten Form umzubiegen. Aufgrund der geringen Biegesteifigkeit des Apex lässt sich dieser Herstellungsschritt mit der Reifenbautrommel mit einem geringen Kraftaufwand und einer hohen Schnelligkeit vollziehen. Der erfindungsgemäße Apex trägt auf diese Weise im Wesentlichen dazu bei, die Fertigungsqualität von Fahrzeugreifen zu verbessern.

### Bezugszeichenliste

### (ist Teil der Beschreibung)

- 1: Apex
- 2: Höhe des Apex (>25 mm)
- 3: Festigkeitsträger
- 4: Unterseite des Apex
- 5: wellenförmiger Verlauf der Festigkeitsträger
- 6: Apex in der Seitenansicht
- 7: Apexmaterial mit weicher Gummimischung
- 8: Reifenkern
- 9: Torsionssteifigkeit des Apex
- 10: Biegesteifigkeit des Apex
- 11: gebogener Apex
- 12: Reifenbautrommel
- 13: Umfangsrichtung des Apex

## Patentansprüche

1. Fahrzeugreifen mit einer Reifenkarkasse, zwei Seitenwänden und zwei Wulstbereichen mit Reifenkernen (8) mit einem Apex (1),
wobei der Apex (1) sich mit dem auf der Unterseite (4) anliegenden Reifenkern (8) in Umfangsrichtung des Fahrzeugluftreifens erstreckt und ringförmig im Reifenwulst angeordnet ist,
wobei der Apex (1) einen im Wesentlichen dreieckförmigen Querschnitt aufweist und aus einem Gummimaterial besteht,
wobei im Apex (1) eine Vielzahl von Festigkeitsträgern (3) angeordnet ist,
wobei der Durchmesser der Festigkeitsträger (3) ca. 5 bis 500 µm beträgt und der Apex (1) mindestens eine Höhe (2) von 25 mm besitzt,
wobei die Festigkeitsträger (3) in Umfangsrichtung (13) ausgerichtet sind und der Apex (1) durch die Anordnung der Festigkeitsträger (3) anisotrope Materialeigenschaften aufweist,
wobei die Torsionssteifigkeit (9) des Apex (1) in der Höhenausrichtung durch die horizontale Anordnung der Festigkeitsträger (3) verstärkt wird,
**dadurch gekennzeichnet, dass**
die Festigkeitsträger (3) im Apex (1) in der Seitenansicht einen wellenförmigen Verlauf aufweisen, wobei die Festigkeitsträger (3) in Form von langen Fasern ausgebildet sind, welche ringförmig und ohne Unterbrechungen im Apex angeordnet sind.

2. Fahrzeugreifen nach Anspruch 1,
**dadurch gekennzeichnet, dass**
die Festigkeitsträger (3) im Apex (1) aus Kunststofffasern bestehen.

3. Fahrzeugreifen nach einem der vorhergehenden Ansprüche,
**dadurch gekennzeichnet, dass**
die Festigkeitsträger (3) im Apex (1) aus Aramid-Kunststofffasern bestehen.

4. Fahrzeugreifen nach Anspruch 1,
**dadurch gekennzeichnet, dass**
die Festigkeitsträger (3) im Apex (1) aus Kohlenstoffnanoröhren oder Kohlenstofffasern bestehen.

5. Fahrzeugreifen nach einem der vorhergehenden Ansprüche,
**dadurch gekennzeichnet, dass**
das Apex-Material aus einer weichen Gummimischung besteht.

## Claims

1. Vehicle tyre comprising a tyre carcass, two sidewalls and two bead regions with tyre cores (8) with an apex (1),
the apex (1) extending in the circumferential direction of the pneumatic vehicle tyre with the tyre core (8) lying on the underside (4) and being arranged annularly in the tyre bead,
the apex (1) having a substantially triangular cross section and consisting of a rubber material,
a multiplicity of reinforcing elements (3) being arranged in the apex (1),
the diameter of the reinforcing elements (3) being about 5 to 500 *µ*m and the apex (1) having a height (2) of at least 25 mm,
the reinforcing elements (3) being aligned in the circumferential direction (13) and the apex (1) having anisotropic material properties as a result of the arrangement of the reinforcing elements (3),
the torsional rigidity (9) of the apex (1) in the height alignment being increased by the horizontal arrangement of the reinforcing elements (3),
**characterized in that**
the reinforcing elements (3) in the apex (1) have a wave-shaped profile in side view, the reinforcing elements (3) taking the form of long fibres which are arranged in the apex annularly and without interruptions.

2. Vehicle tyre according to Claim 1,
**characterized in that**
the reinforcing elements (3) in the apex (1) consist of polymer fibres.

3. Vehicle tyre according to one of the preceding claims,
**characterized in that**
the reinforcing elements (3) in the apex (1) consist of aramid polymer fibres.

4. Vehicle tyre according to Claim 1,
**characterized in that**
the reinforcing elements (3) in the apex (1) consist of carbon nanotubes or carbon fibres.

5. Vehicle tyre according to one of the preceding claims,
**characterized in that**
the apex material consists of a soft rubber compound.

## Revendications

1. Pneu de véhicule avec une carcasse de pneu, deux parois latérales et deux régions de talon avec des noyaux de pneu (8) avec un revers pointu (1),
dans lequel le revers pointu (1) s'étend avec le noyau de pneu (8) reposant sur le côté inférieur (4) dans la direction périphérique du pneumatique de véhicule et est disposé sous forme annulaire dans le talon de pneu, dans lequel le revers pointu (1) présente une section transversale essentiellement triangulaire et se compose d'un caoutchouc,
dans lequel une multiplicité d'éléments de résistance (3) sont agencés dans le revers pointu (1),
dans lequel le diamètre des éléments de résistance (3) vaut environ 5 à 500 *µ*m et le revers pointu (1) présente au moins une hauteur (2) de 25 mm,
dans lequel les éléments de résistance (3) sont orientés en direction périphérique et le revers pointu (1) présente des propriétés anisotropes du fait de l'agencement des éléments de résistance (3),
dans lequel la rigidité à la torsion (9) du revers pointu (1) dans la direction de la hauteur est renforcée par l'agencement horizontal des éléments de résistance (3),
**caractérisé en ce que**
les éléments de résistance (3) présentent dans le revers pointu (1), dans une vue latérale, une allure ondulée, dans lequel les éléments de résistance (3) sont réalisés en forme de longues fibres, qui sont agencées en forme d'anneau et sans interruptions dans le revers pointu.

2. Pneu de véhicule selon la revendication 1, **caractérisé en ce que** les éléments de résistance (3) dans le revers pointu (1) sont composés de fibres de matière plastique.

3. Pneu de véhicule selon l'une quelconque des revendications précédentes, **caractérisé en ce que** les éléments de résistance (3) dans le revers pointu (1) sont composés de fibres de matière plastique aramide.

4. Pneu de véhicule selon la revendication 1, **caractérisé en ce que** les éléments de résistance (3) dans le revers pointu (1) sont composés de nanotubes de carbone ou de fibres de carbone.

5. Pneu de véhicule selon l'une quelconque des revendications précédentes, **caractérisé en ce que** le matériau du revers pointu se compose d'un mélange de caoutchouc souple.
